# EUROPEAN PATENT SPECIFICATION

(11) **EP 0 569 816 B1**
(45) Date of publication and mention of the grant of the patent: **22.07.1998**
(21) Application number: 93107165.8
(22) Date of filing: 03.05.1993
(51) Int. Cl.: G06F 17/60, G07F 7/00, G07F 17/16

(54) **Aggregation system for sales of immaterials in the form of signals**
Aggregationssystem zum Verkaufen von immateriellen Gütern in Form von Signalen
Système d'agglomération pour ventes immatérielles sous forme de signaux

(30) Priority: 11.05.1992 JP 144915/92
(43) Date of publication of application: 18.11.1993
(73) Proprietor: Ainoya, Nobuyuki, Shibuya-ku, Tokyo (JP)
(72) Inventor: Ainoya, Nobuyuki, Shibuya-ku, Tokyo (JP)
(74) Representative: Klunker . Schmitt-Nilson . Hirsch

(56) References cited:
- EP-A- 0 195 098
- WO-A-86/00364
- US-A- 4 674 055
- US-A- 4 787 050
- US-A- 4 893 001

## Description

### FIELD OF THE INVENTION

The present invention relates to an aggregation system for sales of information in the form of signals, wherein signals are put in the distribution line in the information media of, such as, news paper, publication, music and display image, for permitting direct purchase of such signals by unspecific customers without relying on the established sales distribution system, in a manner similar to that for sales of ordinary material products.

### BACKGROUND OF THE INVENTION

Information media can be classified into two groups, namely, a group, in which the activities of businesses can hold without relying on any distribution system, such as for example, TV, radio, CATV, personal computer communication and so on, and a group, in which the businesses require each a distribution system for distributing information carriers carrying plenty of information of values added, such as for example, news paper, magazine, publication, CD (compact disc), video and so on.

The former permits to distribute information on wide areas. However, it does not permit to realize isolate sale of such a large amount of information at real time to each unspecified purchaser. There have heretofore been established for this reason, in a rough classification, two ways of sales of information for enabling such information trading business to be held in a market. One is based on a collection of a fixedly rated charge or fee from each customer. Another one is based on a sale of use of the information distributing system to a sponsor to distribute information to unspecified spectators interested therefor, at a price settled on the basis of, for example, a time-mode, such as in broadcasting businesses, wherein the sponsor buys periods for propagating his commercial advertisements to the audience during the scheduled exhibits. The above two ways of sales of information have been realized in a world-wide practice.

On the other hand, the media group requiring a distribution system realizes sales of information by the steps which comprise a prelimiary step of planning, selection, composition, edition or so of the raw stocks, namely, the original information in the form of, such as news, sounds, literal sentences, pictures and so on to make up into a piece of information with additional values wanted by the consumers or customers; a secondary step of materializing the information into commercial products, such as news papers, magazines, floppy discs and CDs, and putting them into an established material distribution system; and the final step of distributing these products to the customers directly or to the retail shops.

There are also known distribution systems for information where information is stored in a primary memory of a host system and transferred from the host system to a secondary memory in a peripheral system which is, e.g., located in a retail shop remote from the host system. US 4,674,055 discloses a software vending system where the retailer uses the peripheral system to select and download a desired software program from the host system and to temporarily store the selected program in the peripheral system, e.g. for review, prior to duplication thereof on a recording medium which is then to be sold. In EP 0 195 098 A1, information is encoded and stored in an information control machine (host system) and, upon request, the encoded information is transferred and permanently stored in an information manufacturing machine (peripheral system) located at a point of sale (retail shop). In both US 4,674,055 and EP 0 195 098 A1 the information as such cannot be directly purchased by the end-user but must first be recorded on a recording medium which is then sold together with the information recorded thereon. Furthermore, in US 4,674,055 the selection can only be made between the single programs stored in the host system, the host mainly serving as a memory, while in EP 0 195 098 A1 one can only purchase what has already been downloaded into the peripheral system previously, there being no direct access to the host for the end-user himself. There is no provision in the known host systems that information is processed and recomposed in certain blocks of information which can then be selected and purchased by the end-user. Finally, there is still the need for the retailer to collect the money for the information retrieved and also for the recording medium on which the selected information has been recorded.

### OBJECT AND SUMMARY OF THE INVENTION

The object of the present invention is to realize sales and distributions of information in materialized form in an aggregation system in a manner similar to the sales and distribution of ordinary material articles.

The above object is attained according to the present invention as claimed by an aggregation system for sales of information in the form of blocks of signal information, which is constructed by, under cooperation with each other, a unit for processing and administrating the signal information, a group of frontal units for executing practices of sales of blocks of the signal information and a receptacle unit for reading and storing the processed blocks of signal information.

The unit for processing and aggregating the signal information comprises a central processing unit (CPU), a data bank, communication processors and accessoiries. The frontal unit for executing the sales practices may comprise an information processor, a communication processor, a storage device, such as a hard disc, a private output terminal, a display, an electric power source, a money collecting device which may include a coin and paper money identifier, a magnetic card reader or a prepaid card reader and a receipting device having, for example, a receipt printer etc., with participating accessories. The receptacle unit for reading and storing the information blocks from the unit for processing and aggregating the signal information is owned by each individual customer and consists either of a unit which may comprise a miniature information processor having a CPU and a storage medium; a display; a speaker; a miniature tuner; an electric power source; and a pair of exclusive input terminals connectable to each of the frontal units; or consists of an exclusive memory card unit associated with a corresponding exclusive memory card connectable under exclusive coupling therewith by, for example, an individually matched interlocking.

### BRIEF DESCRIPTION OF THE DRAWINGS

Fig. 1 illustrates the general conceptual construction of the processing and aggregating system for sales of signal information according to the present invention.

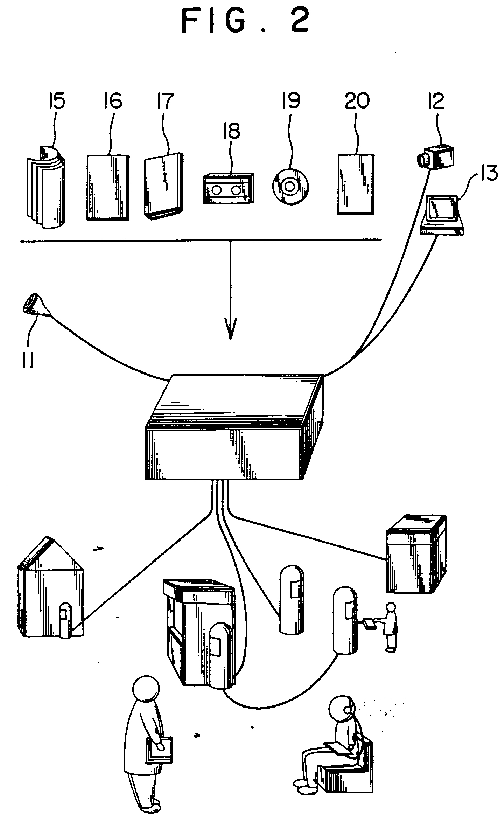

Fig. 2 illustrates the practical operation of the system of the present invention.

Fig. 3 shows an embodiment of the RAM-card unit in perspective view.

Fig. 4 shows the RAM-card unit of Fig. 3 with the RAM-card being pulled out of the unit.

### DETAILED DESCRIPTION OF THE INVENTION

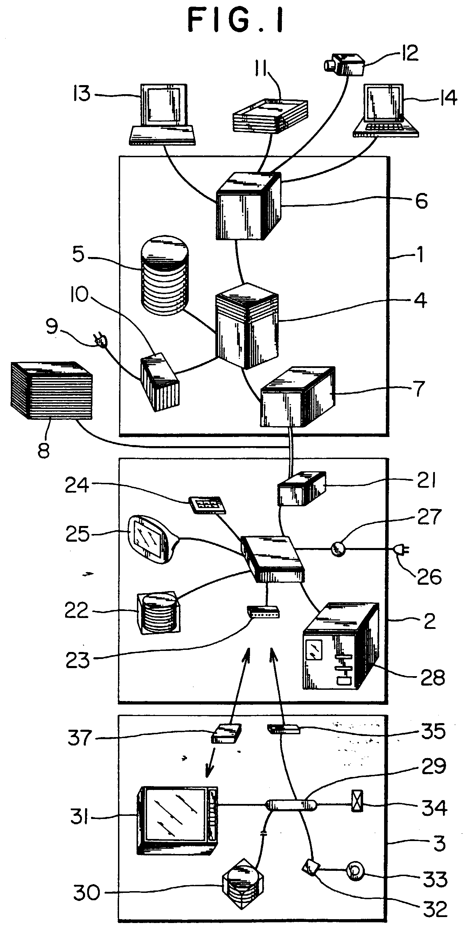

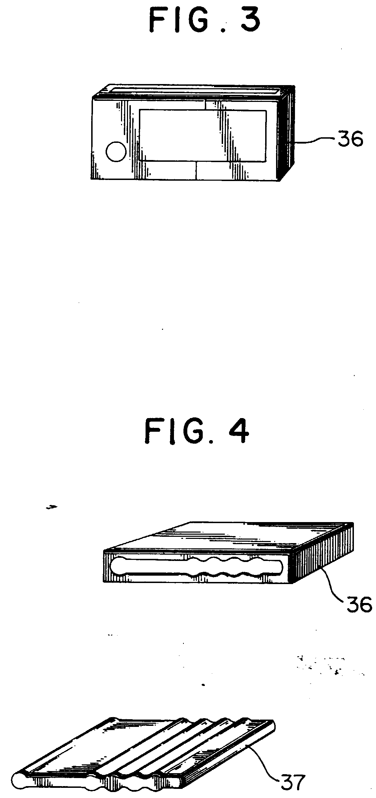

The aggregation system for sales of signal information is organized, as mentioned above and illustrated in Fig. 1, from
(1) a unit for processing and administrating the signal information, which may comprise a CPU operative for processing and re-composing plenty of information from various information media, such as news papers, books and other publications, broadcasting and TV businesses, advertisements, screen and show businesses and computer communications; a data bank for storing the resulting processed blocks of signal information; communication processors for controlling the communication with the external information sources and with the relevant frontal units and regulating the distribution of the designated blocks of signal information to the frontal units,
(2) individually identified frontal units for executing practices of sales of blocks of the signal information to each customer, each of which may comprise an information processor with a selection key board to serve for manipulation by the customer; a communication processor for controlling the communication with the unit 1 and with a crediting shop; a storage device such as a hard disc for a temporary storage of the blocks of signal information read out from the CPU of unit 1; exclusive output terminals for connecting to the receptacle unit for use for monitoring and storing the processed blocks of signal information or to an exclusive memory card unit; a display to serve for selection and confirmation of the contents of the blocks of signal information interested; an electric power source, such as an electric battery, for actuating the frontal unit; a money collecting device which serves for the settlement of the accounts and includes, for example, a coin and paper money identifier and a magnetic card reader or a prepaid card reader, a receipting device for issuing the receipt to the customer by, for example, making use of a receipt printer installed and for producing an electric signal corresponding to the account settlement to be reported to the CPU; and requisite accessories participating in such operations and
(3) a receptacle unit for reading and storing the purchased processed blocks of signal information, which is owned by each customer and either consists of, on the one hand, a unit which may comprise a miniature information processor having a CPU and a regenerative storage medium for writing in and reading out the purchased information blocks; a display for reviewing the purchased information blocks; a notifying device, such as a speaker for an acoustic notice of the operation results to the customer; a receiver for the information signals, such as a miniature tuner for an on-air transmission; an energy source, such as an electric battery, for the actuation of the unit; and an exclusive input terminal connectable to each of the frontal units; or consists of, on the other hand, an exclusive memory card unit associated with a corresponding exclusive memory card connectable thereto under exclusive coupling therewith by, for example, an individual matching engagement, as shown in Fig. 3.

A customer buys requisite information blocks stored in the data bank of the unit for processing and administrating the information using the receptacle unit assigned to him by making access to the CPU of the frontal unit by connecting the exclusive input terminal to the frontal unit under monitoring and selecting the information blocks using the manipulation key board. The cashing or payment therefor is accomplished by means of the money collecting device using cash, money card, prepaid card etc. The account settlement and the information blocks sold are reported to the CPU of the information processing and administrating unit and aggregation of such sales is effected therein at once.

### DETAILED DESCRIPTION OF THE PREFERRED EMBODIMENTS

Explaining now the present invention in more detail by way of an embodiment as shown in Fig. 1, the aggregation system according to the present invention is composed of the three essential elements explained above, i,e, the unit for processing and administrating the signal information denoted generally by numeral 1, which is represented hereinafter by "administration unit", the frontal units for executing practices of sales of information denoted generally by numeral 2, which is represented hereinafter by "frontal unit", and the receptacle unit for reading and storing the purchased processed information denoted generally by numeral 3, which is represented hereinafter by "receptacle unit".

The administration unit 1 comprises a CPU 4, a data bank 5, two communication processors 6 and 7, one assigned to the external information media and the other to the frontal units and to the monetary shops 8, and a power source with 9, preferably, an auxiliary power generation unit 10. The administration unit serves for operating to collect information from various information media that edit and compose such information, such as audio and video businesses, publication businesses and screen and show businesses, and to distribute them in the form of information blocks to each frontal unit, under conversion thereof into series of electrical or optical signals by means of a suitable instruments, such as an image scanner 11 or camera 12, a terminal device 13, a word processor 14 or so on. The CPU 4 in the administration unit 1 serves for re-composing each collected information into suitable information block(s) and distributing such re-composed information blocks to each frontal unit 2 to subject them to reviewing by the customers.

The distribution of the information blocks can be realized in two ways, namely, on air and on line.

The distribution on air has an advantage of widespread coverage area but exhibits disadvantages, such as easy wiretapping, jamming by other radio waves, necessity of radio transmission instruments, such as antenna, amplifier etc., with corresponding enlargement of the installation and of cost therefor.

The distribution on line can be realized using electric or optical communication cables, permitting transmission of latest information of, such as newspapers 15, magazines 16, books 17, video casettes 18, compact disks 19, pictures 20 and so on, to the frontal units 2, easy and reliable transmission of the commands for erasion of the prior infomation blocks stored in the storage medium in the frontal unit and for re-writing the new ones and reliable administration of the stored information block stocks, allowing search and review of the information block stocks and direct access to the data bank in the administration unit 1 in a protected and reliable manner.

Each of the frontal units 2 may comprise an information processor with a selection key board 24 for serve for manipulation by the customer; a communication processor 21 for controlling the communication with the unit 1 and with a crediting shop 8; a storage device such as a hard disc 22 for a temporary storage of the information blocks read out from the CPU 4 of the administration unit 1; an exclusive output terminal 23 for connecting to either one of the exclusive receptacle units 3; a display 25 for selection and confirmation of the contents of the information block interested; an electric power source 26, such as an electric battery 27, for actuating the frontal unit 2; a money collecting device 28 which serves for the settlement of the accounts and includes, for example, a coin and paper money identifier and a magnetic card reader or a prepaid card reader, a receipting device for issuing the receipt to the customer by, for example, making use of a receipt printer installed therein and for producing an electric signal corresponding to the account settlement to be reported to the CPU 4 of the administration unit 1 and to the monetary shop; and other requisite accessories participating in such operations.

The frontal unit 2 serves for realizing the actual sales of the information blocks to the customer by intermediation by a receptacle unit assigned to him. The frontal unit 2 stores the information blocks obtained from the adminitration unit 1 and presents the data required for the sale of the information block to the customer, such as the extent or coverage, the list of the contents, price and so on of the information block, on the display 25 under the regulation by the CPU in the frontal unit 2. One large difference of this system as compared with the ordinary sales by retail shops and automatic vending machines resides in the endless replenishment of the vendible articles, namely, the information blocks.

The administration unit 1 operates to aggregate the number of individual information blocks and the accounts therefor to provide an aggregation report for requidation for, such as, royalty of copyright etc.

Payment at the frontal unit 2 can be realized in four different ways, namely, by cash, by a payment card with identifying card number valid for an affiliated crediting shop or bank, by a prepaid card issued from the information source, such as a newspaper company, or from the organization of this system and by a private payment card with identification number or pass word registered in this system. The payment by a prepaid card may at the most be preferred in respect of the simplicity of the installation and the protection against criminal commitments. For a customer purchasing a large number of information blocks successively, such as business offices etc., a periodically rated payment may be preferred.

The receptacle unit 3 is owned by each customer and either consists of, on the one hand, a unit comprising a miniature information processor having a CPU 29 and a storage medium, such as a hard disc 30; a display 31; a tuner 32; a speaker 33; an electric power source, such as an electric battery 34; and an exclusive input terminal 35 connectable to each of the frontal units; or consists of, on the other hand, an exclusive memory card unit 36 associated with an exclusive RAM-card 37 for exclusive use therefor under fit-in connection by, for example, an individual matching engagement specially designed for each exclusive card, as shown in Fig. 4.

The customer carrying the receptacle unit 3 can review not only the information blocks stored in the storage device in the frontal unit 2 but also every voluntary information stored in the administration unit 1 through the display 25 in the frontal unit 2 by manipulating the selection key board 24 in the frontal unit 2. If the information block thus reviewed is interesting for him, he can buy it by designating the range or number of information blocks to be bought and executing the payment operation by passing a cash, a magnetic card or a prepaid card to the receipting device in the frontal unit 2.

The purchased information blocks can be received in the storage medium (private hard disc 30) or in the exclusive RAM-card 37 of the receptacle unit 3. The customer should pay his attention of as to assure the protection of the hard disc against any abuse or theft thereof. The exclusive RAM-card 37 may adapt to small scale information input but requires longer period of time for reading the information block from the storage medium of the frontal unit 2.

The administration unit 1 and each of the frontal units are connected by a cable communication or by a microwave transmission. The frontal units 2 are distributed over the district at locations convenient for the customers' utilization.

For example, information edited in a morning news paper can be read into the data bank of the administration unit 1 from an external terminal device as a series of signals. The data bank stores the input information by orderly arranging them. The CPU in the administration unit 1 distributes the information in a form of information blocks to each of the frontal units 2 designated by the news paper company, wherein the previous information blocks stored in the storage device of the frontal unit 2 are replaced by the new ones now received. The name of the news paper, date, cost and other data are indicated in the display 25 in the frontal unit 2 together with the data for other news papers. The customer can select any information blocks in his option among them.

The procedures for purchasing information blocks in this system can be effected by
inserting the prepaid card issued from the information medium corresponding to the relevant information blocks into the money collecting device 28 in the frontal unit 2,
pushing the key on the selection key board 24 for the relevant information blocks,
connecting the receptacle unit 3 to the frontal unit 2 by combining the exclusive input and output terminals 35 and 23 of them or inserting the exclusive memory card 37 into the frontal unit 2,
pushing the starting button on the frontal unit 2, whereby the operation of reading out from the storage medium it indicated in the display
disconnecting the two units 2 and 3 after an indication of termination of the reading is given on the display 25 and
taking out the prepaid card from the money collecting device 28 of the frontal unit 2.

The customers are now free to review the bought information on the display 31 of the receptacle unit 3 at any voluntary place, such as in the car, in the office etc., to obtain requisite information.

The administration unit 1 can aggregate every data as to the sold information blocks at realtime, such as the individual customer, number of information blocks, sort of the information, amount of accounts etc., to permit to prepare the data sheet for repayment to each information source.

According to the present invention, it is made possible to realize separate sales of vast amount of information in a form of series of signals to each of a large number of unspecific customers without relying on an established distribution system, by classifying the informations according to their validities and reorganizing them by means of the system according to the present invention under cooperation of the three elementary units, namely, the administration unit 1, the frontal unit 2 and the receptacle unit 3, without employing annoying procedures of summation of the operation time, number of uses of devices, accounts or fee therefor and so on. There is no need for a prospective preparation of each individual information block, permitting an instant administration of the stocks, repayments to the copyright owners, aggregation of the sales data and so on.

## Claims

1. An aggregation system for sales of information in the form of blocks of signal information comprising a unit (1) for processing and administrating the signal information, frontal units (2) distributed adequatly in each district for executing practices of sales of blocks of the signal information to each customer and a receptacle unit (3) owned by each customer for reading and storing the purchased blocks of signal information, wherein said unit (1) for processing and administrating the signal information comprises a CPU (4) operative for processing and re-composing information from various information media; a data bank (5) for storing the resulting processed blocks of signal information; communication processors (6, 7) for controlling the communication with external information sources and with the relevant frontal units (2) and regulating the distribution of the designated blocks of signal information to the frontal units (2), each of said frontal units (2) comprises an information processor with a selection key board (24) to serve for manipulation by the customer; a communication processor (21) for controlling the communication with said unit (1) for processing and administrating the signal information and with a monetary shop (8); a storage device (22) for a temporary storage of the blocks of signal information read out from the CPU (4) of said unit (1) for processing and administrating; an exclusive output terminal (23) for connecting to the receptacle unit (3) for use for monitoring and storing the processed blocks of signal information; a display (25) to serve for selection and confirmation of the contents of the blocks of signal information; an electric power source (26) for actuating the frontal unit (2); and a money collecting device (28) to serve for the settlement of the accounts and for producing an electric signal corresponding to the account settlement to be reported to the CPU (4).

2. An aggregation system as claimed in claim 1, wherein said receptacle unit (3) comprises a miniature information processor having a CPU (29) and a regenerative storage medium (30) for writing in and reading out the purchased blocks of signal information; a display (31) for reviewing the purchased blocks of signal information; an energy source (34) for the actuation of the unit (3); and an exclusive input terminal (35) connectable to each of the frontal units (2).

3. An aggregation system as claimed in claim 1, wherein said receptacle unit (3) comprises an exclusive memory card unit (36) associated with an exclusive memory card (37), said card unit (36) having an exclusive input terminal connectable to each of the frontal units (2).

4. An aggregation system as claimed in claim 2 or 3, wherein said receptacle unit (3) further comprises a notifying device for notifying the operation results to the customer.

5. An aggregation system as claimed in claim 3, wherein said exclusive memory card (37) is a RAM-card.

6. An aggregation system as claimed in claim 3, wherein said exclusive memory card (37) is connectable to the exclusive memory card unit (36) under exclusive coupling therewith.

## Patentansprüche

1. Zusammenstellungssystem für Informationsverkäufe in Form von Signalinformations-Blöcken, umfassend: eine Einheit (1) zum Verarbeiten und Verwalten der Signalinformation, Ausgabeeinheiten (2), die in jedem Bereich adäquat verteilt sind, um Verkäufe von Blöcken der Signalinformation an jeden Kunden auszuführen, und eine Abnahmeeinheit (3) im Besitz des jeweiligen Kunden zum Lesen und zum Speichern der gekauften Blöcke von Signalinformation, wobei die Einheit (1) zum Verarbeiten und Verwalten der Signalinformation aufweist: eine CPU (4), die zum Verarbeiten und erneuten Zusammensetzen von Information von verschiedenen Informationsträgern dient; eine Datenbank (5) zum Speichern der erhaltenen verarbeiteten Blöcke von Signalinformation; Kommunikationsprozessoren (6, 7) zum Steuern der Kommunikation mit externen Informationsquellen und mit den relevanten Ausgabeeinheiten (2) und zum Regulieren der Verteilung der bezeichneten Blöcke von Signalinformation an die Ausgabeeinheiten (2), von denen jede Ausgabeeinheit (2) einen Informationsprozessor mit einer Auswahltastatur (24) zur Handhabung seitens des Kunden enthält, ferner einen Kommunikationsprozessor (21) zum Steuern der Kommunikation mit der Einheit (1) zum Verarbeiten und Verwalten der Signalinformation und mit einer Zahlungsverkehrsstelle (8), sowie eine Speichereinrichtung (22) zur vorübergehenden Speicherung der aus der CPU (4) der Einheit (1) zum Verarbeiten und Verwalten ausgelesenen Signalinformations-Blöcke, einen exklusiven Ausgangsanschluß (23) zum Anschließen der Abnahmeeinheit (3) zwecks Überwachung und Speicherung der verarbeiteten Signalinformations-Blöcke; eine Anzeige (25), die zum Auswählen und Bestätigen der Inhalte der Signalinformations-Blöcke dient, eine elektrische Energiequelle (26) zum Betreiben der Ausgabeeinheit (2), und eine Zahlstelleneinrichtung (28), die zur Begleichung der Rechnungen sowie zur Erzeugung eines der Rechnungsbegleichung entsprechenden elektrischen Signals für den Bericht an die CPU (4) dient.

2. Zusammenstellungssystem nach Anspruch 1, bei dem die Abnahmeeinheit (3) aufweist: einen Miniatur-Informationsprozessor mit einer CPU (29) und einem regenerativem Speichermedium (30) zum Einschreiben und Auslesen der gekauften Signalinformations-Blöcke; eine Anzeige (31) zum Sichten der gekauften Signalinformations-Blöcke; eine Energiequelle (34) zum Betreiben der Einheit (3), und einen exklusiven Eingangsanschluß (35), der an jede der Ausgabeeinheiten (2) anschließbar ist.

3. Zusammenstellungssystem nach Anspruch 1, bei dem die Abnahmeeinheit (3) eine exklusive Speicherkarteneinheit (36) aufweist, zu der eine exklusive Speicherkarte (37) gehört, wobei die Karteneinheit (36) einen exklusiven Eingangsanschluß aufweist, der an jede der Ausgabeeinheiten (2) anschließbar ist.

4. Zusammenstellungssystem nach Anspruch 2 oder 3, bei dem die Abnahmeeinheit (3) außerdem eine Signalisiereinrichtung aufweist, um dem Kunden die Operationsergebnisse mitzuteilen.

5. Zusammenstellungssystem nach Anspruch 3, bei dem die exklusive Speicherkarte (37) eine RAM-Karte ist.

6. Zusammenstellungssystem nach Anspruch 3, bei dem die exklusive Speicherkarte (37) an die exklusive Speicherkarteneinheit (36) über eine einzigartige Kopplung anschließbar ist.

## Revendications

1. Système d'agglomération pour ventes d'informations sous la forme de blocs de signaux d'information comprenant une unité (1) pour le traitement et la gestion des signaux d'information, des unités frontales (2) réparties de façon adéquate dans chaque district pour l'exécution d'activités de ventes de blocs des signaux d'information à chaque client, et une unité-support (3) détenue par chaque client pour la lecture et le stockage des blocs de signaux d'information achetés, dans lequel ladite unité (1) pour le traitement et la gestion des signaux d'information comprend une unité CPU (4) active pour le traitement et la recomposition d'informations provenant de différents médias ; une banque de données (5) pour le stockage des blocs de signaux d'information résultant d'un traitement ; des processeurs de communication (6, 7) pour commander la communication avec des sources d'informations externes et avec les unités frontales (2) concernées et régler la distribution des blocs de signaux d'information indiqués aux unités frontales (2), chacune desdites unités frontales (2) comprenant un processeur d'informations avec un clavier de sélection (24) pour servir à une manipulation par le client ; un processeur de communication (21) pour commander la communication avec ladite unité (1) pour le traitement et la gestion des signaux d'information et avec un établissement monétaire (8) ; un dispositif de mémoire (22) pour un stockage temporaire des blocs de signaux d'information lus dans l'unité CPU (4) de ladite unité (1) pour le traitement et la gestion ; une borne de sortie exclusive (23) pour une connexion à l'unité-support (3) pour servir à un contrôle et à un stockage des blocs de signaux d'information traités ; un dispositif de visualisation (25) pour servir à une sélection et une confirmation des contenus des blocs de signaux d'information ; une alimentation électrique (26) pour actionner l'unité frontale (2) ; et un dispositif de collecte d'argent (28) pour servir au règlement des comptes et à la production d'un signal électrique correspondant au règlement de compte à communiquer à l'unité CPU (4).

2. Système d'agglomération selon la revendication 1, dans lequel ladite unité-support (3) comprend un processeur d'informations miniaturisé comportant une unité CPU (29) et un support de mémoire à régénération (30) pour l'écriture et la lecture des blocs de signaux d'information achetés ; un dispositif de visualisation (31) pour l'examen des blocs de signaux d'information achetés ; une source d'énergie (34) pour actionner l'unité (3) ; et une borne d'entrée exclusive (35) connectable à chacune des unités frontales (2).

3. Système d'agglomération selon la revendication 1, dans lequel ladite unité-support (3) comprend une unité de carte de mémoire exclusive (36) associée à une carte de mémoire exclusive (37), ladite unité de carte (36) ayant une borne d'entrée exclusive connectable à chacune des unités frontales (2).

4. Système d'agglomération selon la revendication 2 ou 3, dans lequel ladite unité-support (3) comprend en outre un dispositif de notification pour notifier les résultats de l'opération au client.

5. Système d'agglomération selon la revendication 3, dans lequel ladite carte de mémoire exclusive (37) est une carte RAM.

6. Système d'agglomération selon la revendication 3, dans lequel ladite carte de mémoire exclusive (37) est connectable à l'unité de carte de mémoire exclusive (36) par un couplage exclusif avec celle-ci.
